# FASCICULE DE BREVET EUROPEEN

(11) **EP 0 759 696 B1**
(45) Date de publication et mention de la délivrance du brevet: **16.08.2001**
(21) Numéro de dépôt: 96904908.9
(22) Date de dépôt: 27.02.1996
(51) Int. Cl.: A21D 13/00, A21D 13/08

(54) **PRODUIT DE BOULANGERIE/PATISSERIE**
KONDITOREI-ODER BACKEREIPRODUKT
BAKERY/CONFECTIONERY PRODUCT

(30) Priorité: 07.03.1995 FR 9502630
(43) Date de publication de la demande: 05.03.1997
(73) Titulaire: DYB CREATION, 75016 Paris (FR)
(72) Inventeur: DESGRANGES, Yves, F-75016 Paris (FR)
(74) Mandataire: Bruder, Michel
(86) Numéro de dépôt international: FR9600298
(87) Numéro de publication internationale: WO9627295

(56) Documents cités:
- DE-U- 8 628 509
- FR-A- 2 666 966
- FR-A- 2 700 461
- US-A- 4 163 065

## Description

La présente invention concerne un produit de boulangerie/pâtisserie.

On connaît, dans le domaine de la confiserie, des friandises, notamment constituées d'oeufs en chocolat creux, à l'intérieur desquelles on a disposé de petits objets, la plupart du temps en matière plastique, et qui sont destinés à constituer des surprises à l'attention des enfants. Ces oeufs sont formés de deux coquilles de chocolat qui sont assemblées après que l'on ait introduit les petits objets entre les coquilles.

Dans le domaine de la boulangerie/pâtisserie, hormis les petits objets en porcelaine que l'on glisse dans les galettes des rois à l'époque de l'épiphanie, on ne connaît pas de tels produits et cela est d'autant plus regrettable qu'ils exercent, notamment sur les enfants, un pouvoir attractif certain.

Une des raisons en est bien entendu que les objets susceptibles d'être introduits dans les produits de boulangerie/pâtisserie sont habituellement des objets en matière plastique, ou des objets fragiles craignant la température, c'est-à-dire des objets dont la résistance à la chaleur est insuffisante pour supporter la température de cuisson à laquelle ces produits sont soumis.

Or la demanderesse a constaté que, de façon particulièrement surprenante, il était possible de soumettre des produits de boulangerie/pâtisserie contenant des objets constitués de matériaux à basse température de fusion, tels que des objets en matière plastique, à des températures supérieures à cette température de fusion afin d'assurer la cuisson de ces produits, sans causer pour autant un dommage aux objets qu'ils contiennent.

La présente invention a ainsi pour but de proposer un produit de boulangerie/pâtisserie de ce type.

La présente invention a ainsi pour objet un produit de boulangerie/pâtisserie caractérisé en ce qu'il renferme dans sa masse au moins un élément dont la température de fusion, ou de détérioration irréversible, est inférieure à la température nécessaire pour assurer la cuisson du produit.

Dans un mode de mise en oeuvre de l'invention, ledit élément est constitué d'une enveloppe qui contient au moins un objet.

Dans une variante de ce mode de mise en oeuvre de l'invention ledit objet est constitué d'un matériau dont la température de fusion est inférieure à la température nécessaire pour assurer la cuisson du produit.

La présente invention a également pour objet un procédé de fabrication d'un produit de boulangerie/pâtisserie caractérisé en ce qu'il consiste à introduire dans la pâte constituant ledit produit, avant la cuisson de celui-ci, au moins un élément dont la température de fusion est inférieure à la température nécessaire pour assurer la cuisson du produit.

On décrira ci-après, à titre d'exemple non limitatif, une forme d'exécution de la présente invention, en référence au dessin annexé sur lequel:
La figure 1 est une vue en coupe d'un produit de boulangerie/pâtisserie suivant l'invention.
La figure 2 est une vue en coupe d'un autre produit de boulangerie/pâtisserie représentant un second mode de mise en oeuvre de l'invention.
Les figures 3 et 4 sont des vues en coupe verticale de produits de boulangerie/pâtisserie suivant l'invention.

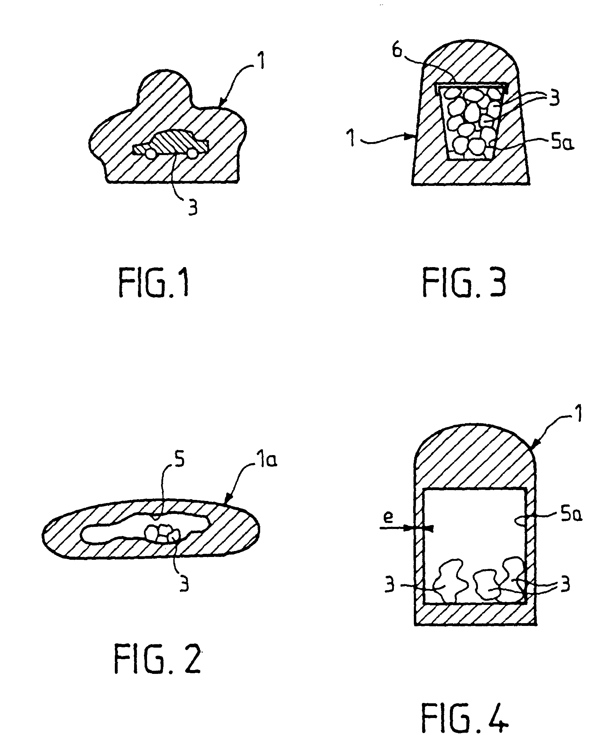

Suivant l'invention, on a représenté sur la figure 1 une brioche 1, dans la pâte de laquelle on a introduit, avant sa cuisson, un objet 3, constitué ici d'une voiture modèle réduit en matière plastique et plus précisément en « nylon ». Les essais effectués par la demanderesse ont établi que ce type d'objets commençait à se déformer de façon irréversible dès que la température devenait voisine de 200°C.

Une fois l'objet 3 introduit dans la pâte, on réalise la cuisson de la brioche 1, sans rien changer au processus de cuisson habituel, à savoir en disposant la brioche 1 contenant l'objet 3 dans un four approprié porté à une température de 250°C pendant 12 minutes.

La cuisson étant terminée on constate, de façon particulièrement surprenante, en ouvrant la brioche 1, que l'objet 3 n'a subi aucune déformation ni détérioration due à la chaleur de la cuisson, bien que la pâte de celle-ci soit parfaitement cuite.

Pour des raisons d'hygiène et, comme représenté sur la figure 2, on peut de préférence disposer les objets à l'intérieur d'un sachet 5 en matière plastique fine et déformable qui, d'une part, préserve la pâte d'un pain la contre des microbes éventuellement contenus dans l'objet 3 et, d'autre part, préserve l'objet 3 lui-même contre les salissures causées par la pâte. Le produit 1 pourra être notamment constitué d'un produit de boulangerie tel que par exemple une baguette ou un pain fantaisie.

Comme représenté sur la figure 3, les objets 3 peuvent également être disposés dans des enveloppes rigides 5a, notamment en matière plastique, éventuellement pourvues d'un couvercle 6.

La demanderesse a constaté que, même dans le cas où comme représenté sur la figure 4, l'épaisseur e de la paroi de pâte séparant l'atmosphère chauffée du four de l'objet, ou de l'enveloppe 5a de celui-ci, était mince, de l'ordre d'un demi centimètre, l'objet ne subissait néanmoins aucune déformation au cours de la cuisson du produit 1.

La présente invention est particulièrement intéressante en ce qu'elle permet de distribuer dans des produits de boulangerie/pâtisserie des objets très divers.

On pourra ainsi offrir des produits sophistiqués comme des montres bon marché, ou plus simplement des bons d'achats divers sous forme de papier ou de carton.

Les produits de boulangerie/pâtisserie susceptibles d'être mis en oeuvre suivant l'invention sont également très divers et concernent en fait tous les produits mettant en oeuvre des pâtes levées.

## Revendications

1. Produit de boulangerie/pâtisserie caractérisé en ce qu'il renferme dans sa masse au moins un élément (3,5,5a) dont la température de fusion, ou de détérioration irréversible, est inférieure à la température nécessaire pour assurer la cuisson du produit (1,1a), la cuisson ne causant aucun dommage audit élément.

2. Produit de boulangerie/pâtisserie suivant la revendication 1 caractérisé en ce que ledit élément est constitué d'une enveloppe (5,5a) qui contient au moins un objet (3).

3. Produit de boulangerie/pâtisserie suivant la revendication 2 caractérisé en ce que ledit objet (3) est également constitué d'un matériau dont la température de fusion, ou de détérioration irréversible, est inférieure à la température nécessaire pour assurer la cuisson du produit.

4. Procédé de fabrication d'un produit (1,1a) de boulangerie/pâtisserie caractérisé en ce qu'il consiste à introduire dans la pâte dudit produit (1,1a), avant la cuisson de celui-ci, au moins un élément (3,5,5a) dont la température de fusion, ou de détérioration irréversible, est inférieure à la température nécessaire pour assurer la cuisson du produit (1,1a).

5. Procédé suivant la revendication 4 caractérisé en ce que ledit élément est constitué d'une enveloppe (5,5a) qui contient au moins un objet (3).

6. Procédé suivant la revendication 5 caractérisé en ce que ledit objet (3) est constitué d'un matériau dont la température de fusion, ou de détérioration irréversible, est inférieure à la température nécessaire pour assurer la cuisson du produit.

## Patentansprüche

1. Bäckerei-/Konditorei-Erzeugnis, dadurch gekennzeichnet, daß es in seiner Masse mindestens ein Element oder Teil (3, 5, 5a) enthält, dessen Schmelztemperatur oder dessen Temperatur der irreversiblen Beschädigung niedriger ist als diejenige Temperatur, die erforderlich ist, um das Backen des Erzeugnisses (1, 1a) zu gewährleisten, wobei das Backen keinen Schaden an dem genannten Element oder Teil verursacht.

2. Bäckerei-/Konditorei-Erzeugnis nach Anspruch 1, dadurch gekennzeichnet, daß das genannte Element oder Teil aus einer Umhüllung (5, 5a) gebildet ist, die mindestens einen Gegenstand (3) enthält.

3. Bäckerei-/Konditorei-Erzeugnis nach Anspruch 2, dadurch gekennzeichnet, daß der genannte Gegenstand (3) in gleicher Weise aus einem Material gebildet ist, dessen Schmelztemperatur oder dessen Temperatur der irreversiblen Beschädigung niedriger ist als diejenige Temperatur, die erforderlich ist, um das Backen des Erzeugnisses zu gewährleisten.

4. Verfahren zur Herstellung eines Bäckerei-/Konditorei-Erzeugnisses (1, 1a), dadurch gekennzeichnet, daß es darin besteht, in den Teig des genannten Erzeugnisses (1, 1a), bevor dieses gebacken wird, mindestens ein Element oder Teil (3, 5, 5a) hineinzugeben, dessen Schmelztemperatur oder dessen Temperatur der irreversiblen Beschädigung niedriger ist als diejenige Temperatur, die erforderlich ist, um das Backen des Erzeugnisses (1, 1a) zu gewährleisten.

5. Verfahren nach Anspruch 4, dadurch gekennzeichnet, daß das genannte Element oder Teil aus einer Umhüllung (5, 5a) gebildet ist, welche mindestens einen Gegenstand (3) enthält.

6. Verfahren nach Anspruch 5, dadurch gekennzeichnet, daß der genannte Gegenstand (3) aus einem Material gebildet ist, dessen Schmelztemperatur oder dessen Temperatur der irreversiblen Beschädigung niedriger ist als diejenige Temperatur, die erforderlich ist, um das Backen des Erzeugnisses zu gewährleisten.

## Claims

1. Bakery/confectionery product, characterized in that it contains in its mass at least one element (3, 5, 5a) of which the melting or irreversible deterioration temperature is lower than the temperature necessary for baking the product (1, 1a), the baking not causing any damage to said element.

2. Bakery/confectionery product according to Claim 1, characterized in that said element is constituted by an envelope (5, 5a) which contains at least one object (3).

3. Bakery/confectionery product according to Claim 2, characterized in that said object (3) is also constituted by a material whose melting or irreversible deterioration temperature is lower than the temperature necessary for baking the product.

4. Process for manufacturing a bakery/confectionery product (1, 1a), characterized in that it consists in introducing in the dough of said product (1, 1a), before it is baked, at least one element (3, 5, 5a) of which the melting or irreversible deterioration temperature is lower than the temperature necessary for baking the product (1, 1a).

5. Process according to Claim 4, characterized in that said element is constituted by an envelope (5, 5a) which contains at least one object (3).

6. Process according to Claim 5, characterized in that said object (3) is constituted by a material whose melting or irreversible deterioration temperature is lower than the temperature necessary for baking the product.
